# EUROPEAN PATENT SPECIFICATION

(11) **EP 4 478 475 B1**
(45) Date of publication and mention of the grant of the patent: **21.10.2026**
(21) Application number: 23824099.8
(22) Date of filing: 16.05.2023
(51) Int. Cl.: H01M 10/42, A62C 3/07, A62C 3/16, A62C 37/40, H01M 10/48, H01M 10/613, H01M 10/625, H01M 10/6556, H01M 10/6567, H01M 50/249, H01M 50/271, H01M 50/383

(54) **BATTERY PACK WITH IMPROVED FIRE SAFETY**
BATTERIEPACK MIT VERBESSERTER FEUERSICHERHEIT
BLOC-BATTERIE À SÉCURITÉ ANTI-INCENDIE AMÉLIORÉE

(30) Priority: 14.06.2022 KR 20220071951
(43) Date of publication of application: 18.12.2024
(73) Proprietor: LG Energy Solution, Ltd., Seoul 07335 (KR)
(72) Inventor: RYU, Sang-Woo, Daejeon 34122 (KR); CHOI, Jee-Soon, Daejeon 34122 (KR); KANG, Dal-Mo, Daejeon 34122 (KR)
(74) Representative: Plasseraud IP
(86) International application number: PCT/KR2023/006642
(87) International publication number: WO 2023/243875

(56) References cited:
- EP-A1- 3 989 336
- EP-A1- 3 989 336
- EP-A1- 4 117 092
- EP-A1- 4 117 092
- CN-A- 106 571 503
- CN-A- 106 571 503
- CN-A- 113 224 418
- JP-A- 2013 136 266
- KR-A- 20130 028 023
- KR-A- 20200 131 618
- KR-A- 20220 070 834
- KR-A- 20220 070 834
- KR-A- 20220 070 834
- US-B2- 10 753 483

## Description

### TECHNICAL FIELD

The present disclosure relates to a battery pack, and more particularly, to a battery pack with a watering structure for suppressing fire and preventing the spread of fire by effectively feeding a cooling water into the battery pack when a thermal event occurs in a battery module.

The present application claims priority to Korean Patent Application No. 10-2022-0071951 filed on June 14, 2022 in the Republic of Korea.

### BACKGROUND ART

Secondary batteries are attracting attention as a new energy source for improving eco-friendliness and energy efficiency since they notably reduce fossil fuel use and do not produce by-products from the use of energy.

Accordingly, the use of secondary batteries in various types of devices is increasing. For example, secondary batteries are being used as an energy source for not only small multifunctional products such as wireless mobile devices or wearable devices but also electric vehicles and hybrid electric vehicles proposed as an alternative to gasoline vehicles and diesel vehicles or energy storage systems (ESSs).

In general, secondary batteries have the operating voltage of about 2.5V to 4.5V of each battery. Accordingly, electric vehicles or energy storage systems requiring large capacity and high output use a battery module including secondary batteries connected in series and/or in parallel and a battery pack including battery modules connected in series and/or in parallel as an energy source.

As secondary batteries are used as a high capacity and high output energy source, ensuring safety of the battery module/pack is an important issue.

Recent battery modules are designed to densely receive as many secondary batteries as possible to improve energy density, so in case where a fire occurs in any one of secondary batteries due to a failure or fault, thermal runaway may easily occur, leading to the spread of the fire to the other adjacent secondary batteries. By this reason, recently, many studies have been conducted on battery packs including fire extinguishing systems to suppress fires in secondary batteries before the fires spread to other secondary batteries or battery modules.

However, in many cases, the fire extinguishing system of the conventional battery pack fail to feed water quickly at the early stage after flames are produced from the battery module to prevent the fire from spreading, and its solution is required. Additionally, the battery pack includes a cooling system to properly manage the working temperature of the battery module, and aside from the cooling system, the addition of the fire extinguishing system to the battery pack causes a decrease in production process/design/cost.

### DISCLOSURE

### Technical Problem

The invention as defined in the appended claims is designed to solve the above-described problems, and therefore the present disclosure is directed to providing a battery pack with a watering structure for suppressing fire and preventing the spread of fire by effectively feeding cooling water into the battery pack when a thermal event occurs in a battery module.

The present disclosure is further directed to providing a battery pack including a combination of a cooling system and a fire extinguishing system to use cooling water for managing the temperature of a battery module to suppress fire, but not additionally applying water or a fire extinguishing agent to the battery pack.

The technical problem to be solved by the present disclosure is not limited to the above-described problems, and these and other problems will be clearly understood by those skilled in the art from the following description.

Examples of background art can be found in EP 3 989 336 A1, KR 2022 0070834 A and EP 4 117 092 A1, whereas EP 4 117 092 A1 is considered an intermediate document.

### Technical Solution

According to the claimed invention, there is provided a battery pack including a plurality of battery modules; and a pack case including a pack tray having an open top and an internal space in which the plurality of battery modules is received, and a pack cover coupled to top of the pack tray, wherein the pack cover includes a bottom cover having a valve mounting hole which is open in a preset region and disposed on the pack tray, wherein the valve mounting hole is a hole formed to allow cooling water to move down from the top of the bottom cover; a top cover having a flow channel region which forms a movement path of cooling water and disposed on an upper surface of the bottom cover; and a valve unit which is rotatably mounted in the valve mounting hole in a clockwise or counterclockwise direction, wherein the valve unit is configured to supply the cooling water in the flow channel region to the internal space of the pack tray or to stop the supply of the cooling water in the flow channel region to the internal space of the pack tray.

The battery pack may further include a gas detector disposed in the pack tray or the battery module, and the valve unit may be configured to rotate based on a gas detection signal of the gas detector.

The valve unit and the gas detector may be connected with a signal transmission cable.

The valve unit may include a rotary plate which is inserted and rotatably disposed in the valve mounting hole; and a drainage hole formed in a region of the rotary plate.

The valve unit may include the rotary plate configured to rotate by a predetermined angle into a closed state in which the drainage hole does not match in communication with the flow channel region or an open state in which at least a portion of the drainage hole matches bottom of the flow channel region and is disposed in communication with the flow channel region.

The drainage hole may be rectangular in shape.

The flow channel region may include linear sections spaced a predetermined distance apart from each other and a curved section connecting the linear sections, and the drainage hole may have a short side length which is shorter than the distance between the linear sections and a long side length which is longer than the distance between the linear sections.

The pack tray may have the internal space divided by a partition to form a plurality of module receiving portions, and each one battery module may be disposed in each of the module receiving portions.

Each of the module receiving portions may be covered by the bottom cover so that a top may be closed.

A plurality of valve units may be coupled to the bottom cover so as to be located vertically on each battery module.

The battery module includes battery cells and a module housing accommodating the battery cells, and the module housing includes a drainage channel which is recessed to a predetermined depth in a top portion and formed from one edge to the other edge.

The drainage channel may be disposed vertically below the valve unit.

A busbar frame electrically connecting the battery cells may be disposed below an end of the drainage channel.

A gas detector may be attached to one wall of the pack tray, the valve unit and the gas detector may be connected with a signal transmission cable, the valve unit may be configured to rotate based on a gas detection signal of the gas detector, and the signal transmission cable may be inserted into a groove for cable laying formed in the top portion of the module housing.

According to another aspect of the present disclosure, there is provided a vehicle comprising the above-described battery pack.

### Advantageous Effects

The invention as defined in the appended claims may provide the battery pack with the watering structure for effectively feeding cooling water into the battery pack when a thermal event occurs in the battery module, thereby suppressing fire and preventing the spread of fire.

Additionally, the present disclosure may detect venting gas leaks in the battery module in which the thermal event occurred and open the valve unit to feed a large amount of cooling water into the corresponding battery module before flames occur, thereby preventing fires quickly.

Additionally, since the present disclosure may use cooling water for managing the temperature of the battery module in normal situation to suppress fires in the battery module, there is no need to additionally apply water or a fire extinguishing agent to the battery pack.

Additionally, according to the present disclosure, the inside of the pack case is divided into areas by the screen type partition, and when venting gas is produced in a specific area, cooling water is only fed into the specific area. Accordingly, the battery modules disposed in the other area may avoid flood damage.

The effect of the present disclosure is not limited to the above-described effects, and these and other effects will be clearly understood by those skilled in the art from this disclosure and the accompanying drawings.

### DESCRIPTION OF DRAWINGS

FIG. 1 is a schematic perspective view of a battery pack according to an embodiment of the present disclosure.
FIG. 2 is an exploded perspective view of the battery pack of FIG. 1.
FIG. 3 is a diagram showing a battery module and a pack tray according to an embodiment of the present disclosure.
FIG. 4 is a diagram showing battery modules mounted in the partitioned internal space of the pack tray in FIG. 3 and gas detectors.
FIG. 5 is a diagram showing a bottom cover and a valve unit disposed on top of the pack tray of FIG. 4.
FIG. 6 is a diagram showing a bottom cover having the valve unit of FIG. 5, and a top cover disposed on top of the bottom cover.
FIG. 7 is a diagram showing an example for bolting of a pack tray and a pack cover according to an embodiment of the present disclosure.
FIG. 8 is a diagram showing a valve unit in a closed state in a battery pack according to an embodiment of the present disclosure.
FIG. 9 is a diagram showing a valve unit in an open state in a battery pack according to an embodiment of the present disclosure.
FIG. 10 is a diagram showing a movement path of cooling water in a pack tray when a valve unit is open, in which a pack cover of FIG. 9 is omitted.
FIG. 11 is a diagram showing an example of cooling water filled in only a first module receiving portion in FIG. 10.
FIG. 12 is a diagram schematically showing a vehicle including a battery pack according to an embodiment of the present disclosure.

### BEST MODE

Hereinafter, exemplary embodiments of the invention as defined in the appended claims will be described in detail with reference to the accompanying drawings.

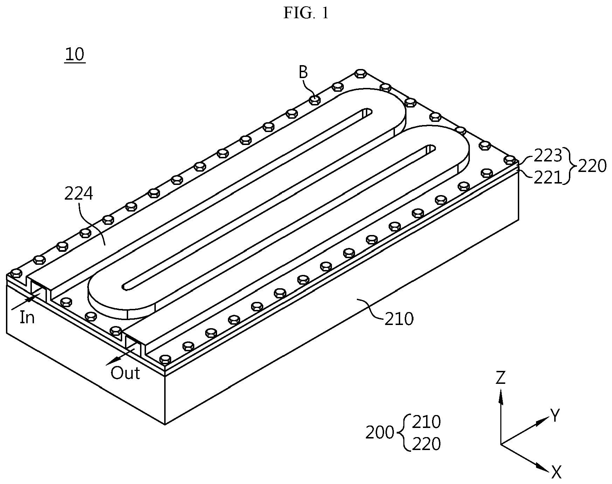

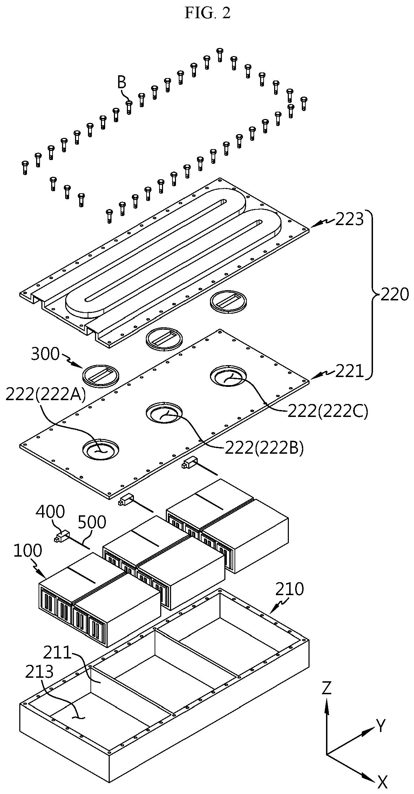

FIG. 1 is a schematic perspective view of a battery pack according to an embodiment of the present disclosure, and FIG. 2 is an exploded perspective view of the battery pack of FIG. 1.

Referring to FIGS. 1 and 2, the battery pack 10 according to the present disclosure includes at least one battery module 100, a pack case 200 and a valve unit 300.

The battery pack 10 according to an embodiment of the present disclosure includes three battery modules 100A,100B,100C, and the pack case 200 having the internal space divided by a partition 211 to form three module receiving portions 213A,213B,213C where each one battery module 100 is received in each module receiving portion 213. However, the number of battery modules 100 may be one, two or four or more depending on the electricity capacity or output required for the battery pack 10, and accordingly the size of the pack case 200, the presence or absence of the partition 211 or the number of the partitions 211 may be determined.

Additionally, the pack case 200 accommodate the battery modules 100 and includes a pack tray 210 and a pack cover 220 vertically coupled to each other as shown in FIG. 2. In particular, the pack cover 220 may be configured to allow cooling water to flow inside to cool down the battery modules 100 by indirect contact between the battery modules 100 and the cooling water. Additionally, the valve unit 300 may be rotatably mounted in the pack cover 220 in the clockwise or counterclockwise direction, and may be mounted in a valve mounting hole 222 of the pack cover 220 to prevent cooling water leaks in the pack cover 220 in normal situation, and when fire hazard such as gas generation is detected in the battery module 100, rotate by a predetermined angle to allow cooling water in the pack cover 220 to be poured down into the pack tray 210.

By the above-described configuration of the battery pack 10, it may be possible to properly maintain the temperature of the battery modules 100 in normal situation, and feed cooling water into the internal space of the pack tray 210 rapidly when a thermal event occurs, thereby effectively suppressing the spread of fire in the battery module 100.

The main components of the battery pack 10 will be described in more detail below.

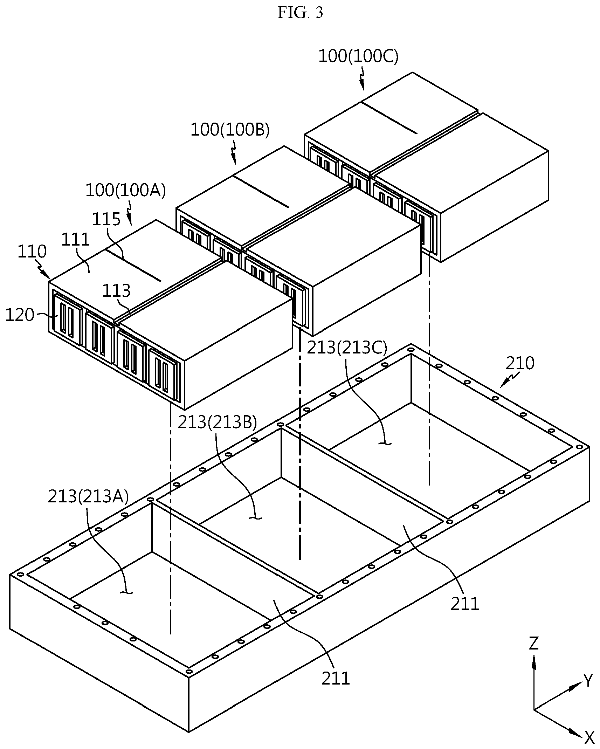

Referring to FIG. 3, the battery module 100 according to this embodiment includes a plurality of battery cells and a module housing 110 accommodating the plurality of battery cells.

The battery cell may include any type of battery cell known at the time the application was filed. The battery pack 10 of the present disclosure may include any type of battery cell, for example, an approximately cylindrical or prismatic battery cell including a metal can type packaging material hermetically accommodating an electrode assembly and an electrolyte solution, or an approximately plate shaped pouch type battery cell including a pouch type packaging material hermetically accommodating an electrode assembly and an electrolyte solution.

The battery module 100 of this embodiment includes pouch type battery cells (not shown). For example, the pouch type battery cells, each standing upright in the up-down direction (Z direction), may be stacked in the left-right direction (X direction) with wide surfaces facing each other to form a cell stack, and the cell stack may be received in the module housing 110. Accordingly, the battery module 100 including the pouch type battery cells may have high energy density. The pouch type battery cells may have electrode leads at one or two ends in the lengthwise direction (Y direction), and the electrode leads may be welded and electrically connected to busbars provided in the form of a metal rod coupled to a busbar frame 120.

The module housing 110 may be a structure for supporting the battery cells to prevent them from moving and protecting the battery cells from external impacts, and may be made of a material having high mechanical strength. In the case of this embodiment, the module housing 110 may include a top portion 111, a bottom portion, a left side portion and a right side portion to cover a top side, a bottom side, a left side and a right side of the cell stack, respectively, and a front side and a rear side may be open. The pouch type battery cells may have the electrode leads at the open front and rear sides of the module housing 110, and the electrode leads may be welded to the busbar frame 120 in a predetermined pattern. Additionally, the welded part of the electrode leads may be covered with an end plate (not shown) to prevent the exposure. Although not shown for convenience of illustration, the end plate may be coupled to the front side and the rear side of the module housing 110.

The pack case 200 is a structure that protects the at least one battery module 100 from external impacts, and accommodates the battery modules 100 to prevent flames or sparks from escaping from the battery pack 10 in the event of a fire in the battery module 100.

The pack case 200 includes the pack tray 210 and the pack cover 220.

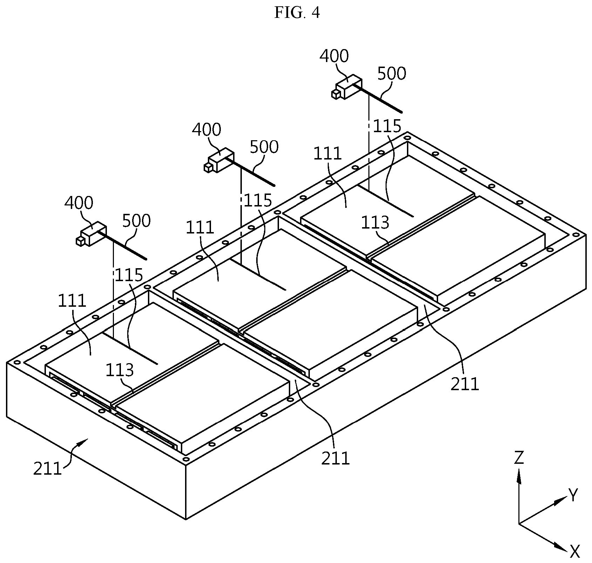

The pack tray 210 may have the open top and the internal space in which the battery module 100 is received. Referring to FIGS. 3 and 4, the pack tray 210 includes a bottom plate having a wide area in which the plurality of battery modules 100 may be arranged and walls formed at the edge of the bottom plate and disposed at least higher than the battery module 100. The internal space may be defined as a space surrounded by the bottom plate and the walls. Additionally, the walls may have bolting holes in the top surfaces.

Additionally, the pack tray 210 according to this embodiment includes the partitions 211 that divide the internal space into areas. Each of the areas defined by the partitions 211 is defined as the module receiving portion 213.

The partitions 211 may be formed with the same height as the walls. Accordingly, when the pack cover 220 is coupled to the pack tray 210, the top and sides of each module receiving portion 213 may be covered and closed by the pack cover 220 and the partitions 211.

Each one battery module 100 is disposed in each of the module receiving portions 213 and the pack tray 210 and the pack cover 220 are bolted B together. Then, each of the battery modules 100 in the pack case 200 is disposed in the closed space. For example, the battery modules 100 may be electrically connected in series and/or in parallel. Although not shown in FIG. 3 and the other figures for clarity of description, the battery modules 100 may be electrically connected to each other with a cable or a flexible busbar, and the cable or the flexible busbar may be installed such that it may pass through the partition 211 or the bottom plate of the pack tray 210. A portion of the cable or the flexible busbar passing through the partition 211 or the pack tray 210 may be sealed.

By the above-described configuration, for example, in a situation in which a fire occurred in a certain battery module 100 located in a specific area, flames do not spread to the other battery module 100 located in the other area. Additionally, as described below, when cooling water is fed into the specific area from the pack cover 220 to suppress the fire in the certain battery module 100, it may be possible to prevent cooling water from moving to the other area. Accordingly, even though cooling water is fed into the pack tray 210, except the battery module 100 in which the thermal event occurred, the other battery modules 100 may be normally reused.

The pack cover 220 may be configured to cover the battery modules 100 and coupled to the top of the pack tray 210. In particular, the pack cover 220 according to the present disclosure may include two plates covering the pack tray 210 and having a flow channel in which cooling water flows, and one of the two plates may be used to cover the pack tray 210 and the other one may be used to form the flow channel.

The pack cover 220 is bolted B to the pack tray 210 and coupled to the top of the pack tray 210, and has an inlet for allowing cooling water to enter the flow channel as indicated by 'In' in FIG. 1 and an outlet for allowing cooling water to exit the flow channel as indicated by 'Out'. In an example, the battery pack 10 of the present disclosure may be mounted in a vehicle, and in this case, a pipe may be connected to the inlet and the outlet to allow cooling water used to cool down the components of the vehicle to enter the flow channel through the inlet of the pack cover 220 and exit through the outlet.

Describing the main components of the pack cover 220, as shown in FIG. 2, the pack cover 220 includes a bottom cover 221 having the valve mounting hole 222 that is open in a preset region and disposed on the pack tray 210, and an upper cover having a contact region 225 in contact with the upper surface of the bottom cover 221 and a flow channel region 224 convexly formed with respect to the upper surface of the bottom cover 221 to allow cooling water to flow.

The bottom cover 221 may be in the shape of a plate having enough area to cover the top of the pack tray 210 and in which only the valve mounting hole 222 is open. The valve mounting hole 222 is a hole formed in the bottom cover 221 to allow cooling water to move down from the top of the bottom cover 221, and in this embodiment, three valve mounting holes 222 are provided. The three valve mounting holes 222A,222B,222C are disposed vertically on each battery module 100. As the valve unit 300 is mounted for each of the valve mounting holes 222A,222B,222C, the valve unit 300 may be located vertically on each battery module 100.

In the case of this embodiment, the valve unit 300 includes a first valve unit 300A, a second valve unit 300B and a third valve unit 300C. The three valve units 300A,300B,300C may be rotatably mounted in the three valve mounting holes 222A,222B,222C in the clockwise or counterclockwise direction to supply cooling water in the pack cover 220 to the internal space of the pack tray 210 or stop the supply.

The valve unit 300 includes a rotary plate 310 that is inserted and rotatably disposed in the valve mounting hole 222, and a drainage hole 320 formed in a region of the rotary plate 310. The valve mounting hole 222 may be formed such that the diameter of the upper part is larger than the diameter of the lower part in the thicknesswise direction (Z direction) of the bottom cover 221. The rotary plate 310 may be mounted in the valve mounting hole 222 such that the periphery is disposed at the boundary surface between the small diameter and the large diameter in the valve mounting hole 222 to prevent slipping down the valve mounting hole 222.

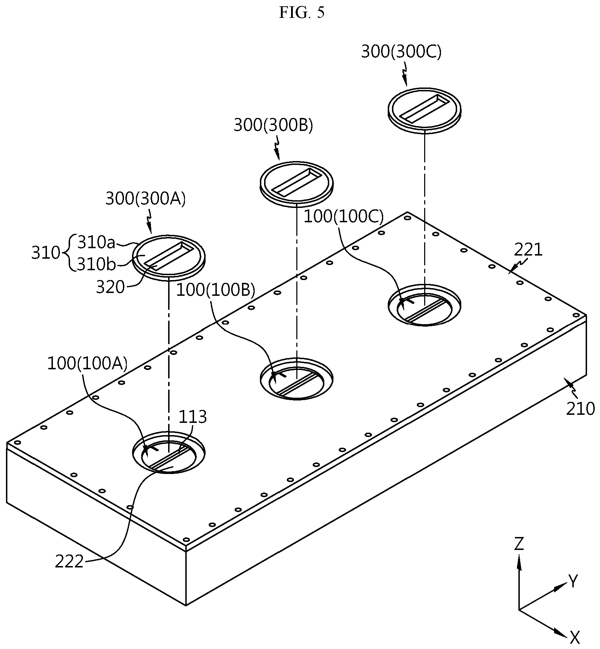

As shown in FIG. 5, the rotary plate 310 includes an outer circular portion 310a and an inner circular portion 310b. The outer circular portion 310a may be fixedly attached to the boundary surface in the valve mounting hole 222 and the inner circular portion 310b may be rotatably disposed inside of the outer circular portion 310a. A driving device may be embedded in the outer circular portion 310a and/or the inner circular portion 310b to rotate the inner circular portion 310b. The driving device may include a motor, a gear, a rotating shaft or the like, but any driving device having the working mechanism for rotating the rotary plate 310 in the valve mounting hole 222 may be applied.

The drainage hole 320 is a region that is open in the rotary plate 310 to allow cooling water to move down from the top of the rotary plate 310. When the valve unit 300 is rotated and the drainage hole 320 is aligned with the flow channel region 224 of a top cover 223 as described below, cooling water may exit in the downward direction of the rotary plate 310 through the drainage hole 320. It will be described in more detail below.

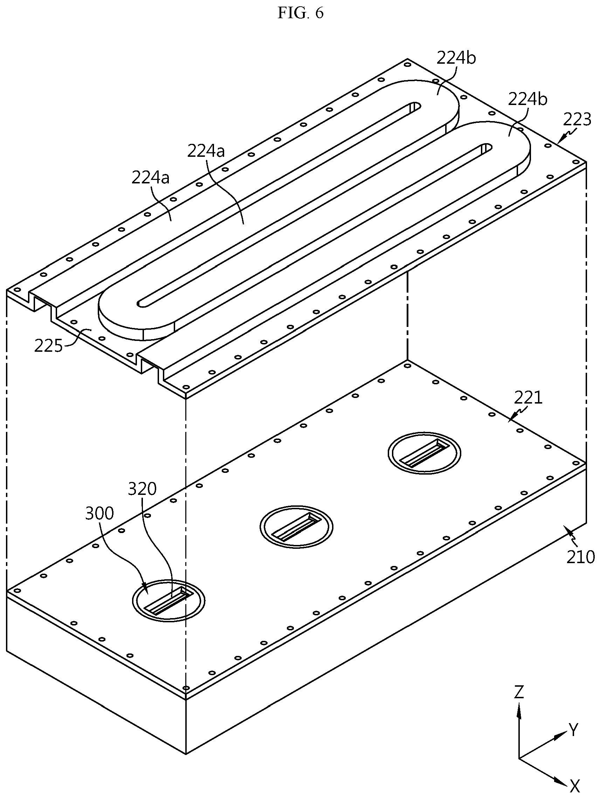

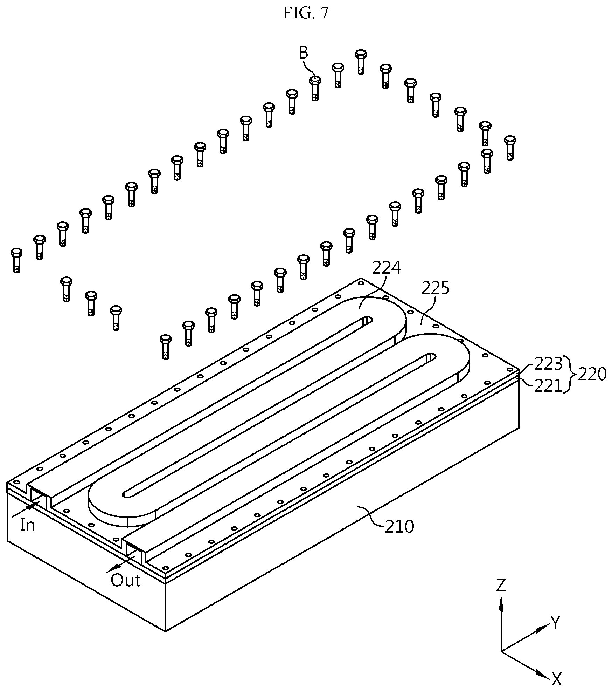

As shown in FIGS. 6 and 7, the top cover 223 includes the flow channel region 224 convexly formed with respect to the upper surface of the bottom cover 221 to form a movement path of cooling water, and the contact region 225 disposed in contact with the upper surface of the bottom cover 221. The top cover 223 may be disposed in contact with the bottom cover 221 disposed on the pack tray 210 and may be fixedly coupled to the top of the pack tray 210 together with the bottom cover 221 by the bolt B.

Additionally, the flow channel region 224 of the top cover 223 may include linear sections 224a arranged spaced a predetermined interval apart from each other and a curved section 224b connecting the linear sections 224a. The linear section 224a may be formed from the inlet located on one side of the pack case 200 to the other end of the pack case 200 in +Y direction, the curved section 224b may be formed in +X direction from the end of the linear section 224a, and the linear section 224a may be formed again in -Y direction from the end of the curved section 224b. When the linear section 224a and the curved section 224b repeat in this pattern, cooling water may absorb heat from the pack case 200 while it is flowing over the pack cover 220 until leaving through the outlet.

Additionally, the valve unit 300 is applied to the pack cover 220 to use cooling water flowing along the flow channel to suppress a fire in the battery module 100 in which a thermal event occurred.

In other words, the valve unit 300 may be applied to the pack cover 220 such that it rotates by the predetermined angle into the closed state in which the drainage hole 320 does not match in communication with the flow channel region 224 or the open state in which at least a portion of the drainage hole 320 matches the bottom of the flow channel region 224 and is disposed in communication with the flow channel region 224.

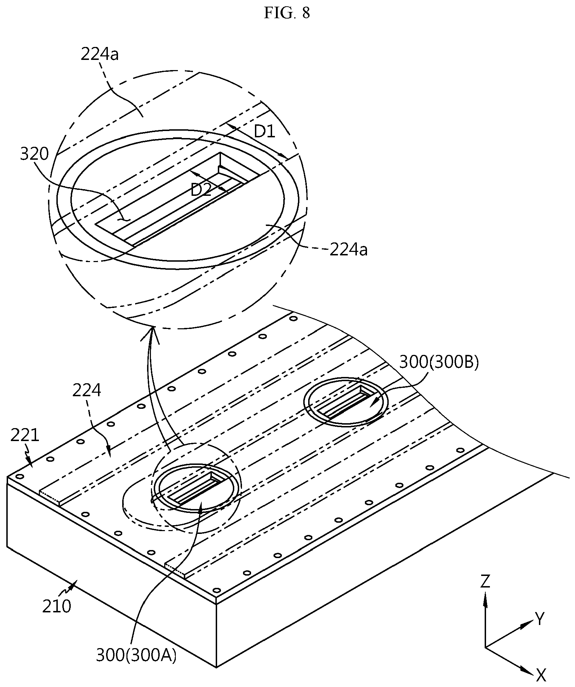

As shown in FIG. 8, the drainage hole 320 may be approximately rectangular in shape such that the length D2 of the short side is shorter than the distance D1 between the adjacent linear sections 224a of the flow channel region 224 and the length of the long side is longer than the distance between the linear sections 224a.

Accordingly, when a portion of the rotary plate 310 having no drainage hole 320 is disposed below the linear sections 224a of the flow channel region 224 and the drainage hole 320 is disposed between the linear sections 224a, cooling water leaks do not occur in the flow channel of the pack cover 220.

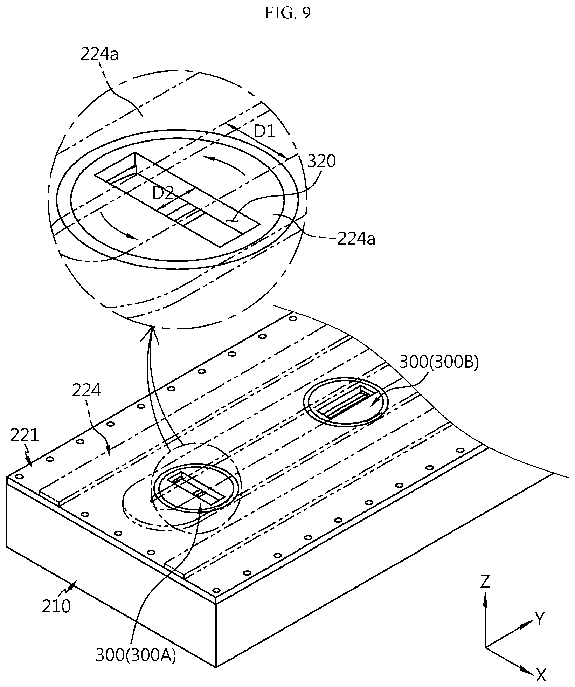

On the contrary, as shown in FIG. 9, when the rotary plate 310 is rotated and at least a portion of the drainage hole 320 is disposed below the flow channel region 224, cooling water in the flow channel may be dropped down to the bottom cover 221 through the drainage hole 320 and fed into the pack tray 210.

Meanwhile, the battery pack 10 according to the present disclosure may further include a gas detector 400 to feed cooling water before flames are produced in the battery module 100 by rotating the valve unit 300 at the moment when venting gas is produced in the battery module 100.

Referring to FIGS. 2 to 4 and FIGS. 10 and 11 together, the gas detector 400 according to this embodiment may be attached to one wall of the pack tray 210, and may be disposed for each of the three module receiving portions 213. Although not shown, the gas detector 400 may be disposed in the battery module 100. The gas detector 400 disposed in the battery module 100 may be a small gas sensor (not shown).

The gas detector 400 may be applied to the inside of the pack case 200 to detect venting gas from the battery module 100, and the valve unit 300 may be configured to rotate based on a gas detection signal of the gas detector 400 so as to be open.

For example, the gas detector 400 and the valve unit 300 may be connected with a signal transmission cable 500, and when an operating signal or power is transmitted to the valve unit 300 through the signal transmission cable 500, in response, the rotary plate 310 of the valve unit 300 may rotate to feed cooling water from the pack cover 220 into the pack tray 210.

Additionally, in the case of the battery pack 10 of this embodiment, as described above, the internal space of the pack tray 210 is divided by the partition 211 to form the three module receiving portions 213, and each one battery module 100 is disposed in each of the module receiving portions 213. Additionally, the gas detector 400 is disposed for each module receiving portion 213 to detect gas in each module receiving portion 213, and the valve unit 300 is also disposed vertically on each module receiving portion 213. Accordingly, since each valve unit 300 operates based on the gas detection signal of the connected gas detector 400 connected thereto, cooling water is not fed into the module receiving portion 213 in which venting gas is not detected.

Additionally, the module housing 110 of the battery module 100 according to this embodiment has a drainage channel 113 that is recessed to a predetermined depth in the top portion 111 and formed from one edge to the other edge. The drainage channel 113 is located vertically below the valve unit 300. According to the above-described configuration, when the valve unit 300 rotates and cooling water falls down through the drainage hole 320, cooling water may move in the front-rear direction (±Y direction) of the battery module 100 along the drainage channel 113 of the module housing 110.

When cooling water moves in the front-rear direction of the battery module 100, since the busbar frame 120 is located below the end of the drainage channel 113, a larger amount of cooling water may be allowed to flow to the electrode lead part of the battery cells. In general, the electrode lead part is vulnerable to venting gas and flames, so it may be possible to increase the fire suppression effect by allowing cooling water to first flow to the electrode lead part.

Additionally, the top portion 111 of the battery module 100 housing includes a groove 115 for cable laying. The signal transmission cable 500 connecting the gas detector 400 to the valve unit 300 may be embedded and fixed in the groove 115 for cable laying.

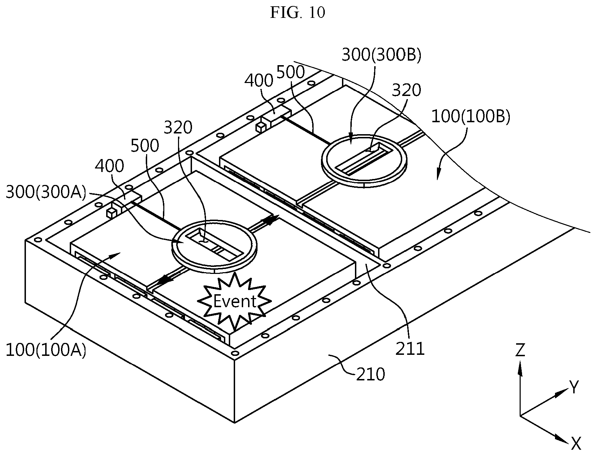

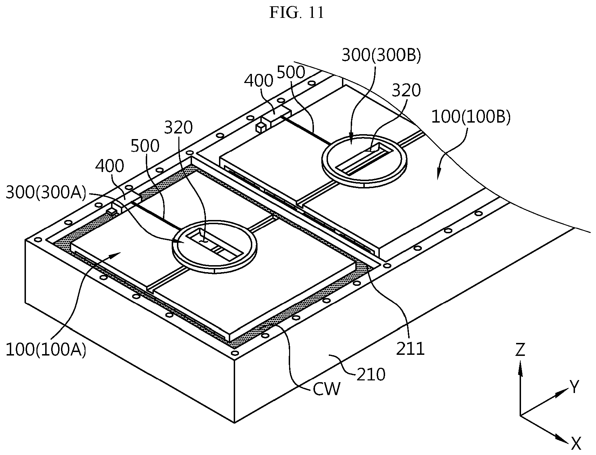

According to the above-described configuration of the battery pack 10 according to the present disclosure, for example, as shown in FIG. 10, when a thermal event occurs in the first battery module 100A and venting gas is detected by the gas detector 400, the first valve unit 300A is immediately rotated into the open state, and in turn, cooling water in the pack cover 220 falls down on the first battery module 100A through the drainage hole 320 of the first valve unit 300A. In this instance, as described above, the first module receiving portion 213A, the second module receiving portion 213B and the third module receiving portion 213C are physically isolated from each other and the gas detector 400 of the second module receiving portion 213B and the third module receiving portion 213C does not detect venting gas in the first module receiving portion 213A so the second valve unit 300B and the third valve unit 300C do not work. Accordingly, as shown in FIG. 11, only the first module receiving portion 213A is filled with cooling water. Accordingly, before flames are produced, the first battery module 100A is flooded in cooling water, thereby suppressing fire, and the second battery module 100B and the third battery module 100C are not flooded and can be re-used.

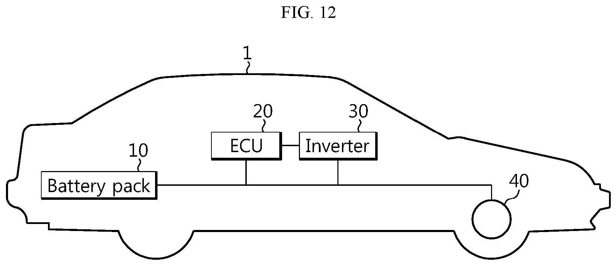

Subsequently, a vehicle according to the present disclosure will be briefly described with reference to FIG. 12.

FIG. 12 is a diagram schematically showing the vehicle including the battery pack 10 according to an embodiment of the present disclosure.

Referring to FIG. 12, the vehicle 1 according to the present disclosure may include the battery pack 10 according to an embodiment of the present disclosure, an Electronic Control Unit (ECU) 20, an inverter 30 and a motor 40. Preferably, the vehicle 1 may be an electric vehicle.

The battery pack 10 may be used as an electrical energy source for supplying power to the motor 40 to drive the vehicle 1. The battery pack 10 may be charged or discharged by the inverter 30 by the operation of the motor 40 and/or a combustion engine (not shown). The battery pack 10 may be charged by a regenerative charging device coupled to the brake. The battery pack 10 may be electrically connected to the motor 40 of the vehicle through the inverter 30.

The ECU 20 is an electronic control device that controls the condition of the vehicle 1. For example, the ECU 20 determines torque information based on information associated with the accelerator, the brake and the speed, and controls the output of the motor 40 based on the torque information. Additionally, the ECU 20 sends a control signal to the inverter 30 to charge or discharge the battery pack 10 based on state information of the battery pack 10 received by a battery management system (BMS) such as State of Charge (SOC), State of Health (SOH) or the like. The inverter 30 charges or discharges the battery pack 10 based on the control signal of the ECU 610. The motor 40 drives the vehicle 1 based on the control information (for example, the torque information) transmitted from the ECU 20 using electrical energy of the battery pack 10.

As described above, the battery pack 10 may properly maintain the temperature of the battery module 100 in normal situation, and when a thermal event occurs in the battery module 100, may rapidly flood the battery module 100 in which the thermal event occurred using cooling water used to manage the temperature of the battery module 100, thereby suppressing fire. Accordingly, safety is maintained even when a problem occurs in the battery pack 10 while the vehicle 1 is driving.

The terms indicating directions such as upper, lower, left and right are used for convenience of description, but it is obvious to those skilled in the art that the terms may change depending on the position of the stated element or an observer.

## Claims

1. A battery pack (10), comprising:
a plurality of battery modules (100), each including battery cells and a module housing (110) accommodating the battery cells, wherein the module housing (110) includes a drainage channel (113) which is recessed to a predetermined depth in a top portion (111) and formed from one edge to the other edge; and
a pack case (200) including a pack tray (210) having an open top and an internal space in which the plurality of battery modules (100, 100A, 100B, 100C) is received, and a pack cover (220) coupled to top of the pack tray (210),
wherein the pack cover (220) includes:
a bottom cover (221) having a valve mounting hole (222, 222A, 222B, 222C) which is open in a preset region and disposed on the pack tray (210), wherein the valve mounting hole (222) is a hole formed to allow cooling water to move down from the top of the bottom cover (221);
a top cover (223) having a flow channel region (224) which forms a movement path of the cooling water and disposed on an upper surface of the bottom cover (221); and
a valve unit (300, 300A, 300B, 300C) which is rotatably mounted in the valve mounting hole (222, 222A, 222B, 222C) in a clockwise or counterclockwise direction, wherein the valve unit (300, 300A, 300B, 300C) is configured to supply the cooling water in the flow channel region (224) to the internal space of the pack tray (210) or to stop the supply of the cooling water in the flow channel region (224) to the internal space of the pack tray (210).

2. The battery pack (10) according to claim 1, further comprising:
a gas detector (400) disposed in the pack tray or the battery module (100, 100A, 100B, 100C),
wherein the valve unit (300, 300A, 300B, 300C) is configured to rotate based on a gas detection signal of the gas detector (400).

3. The battery pack (10) according to claim 2, wherein the valve unit (300, 300A, 300B, 300C) and the gas detector (400) are connected with a signal transmission cable (500).

4. The battery pack (10) according to claim 1, wherein the valve unit (300, 300A, 300B, 300C) includes:
a rotary plate (310) which is inserted and rotatably disposed in the valve mounting hole (222, 222A, 222B, 222C); and
a drainage hole (320) formed in a region of the rotary plate (310).

5. The battery pack (10) according to claim 4, wherein the valve unit (300, 300A, 300B, 300C) includes the rotary plate (310) configured to rotate by a predetermined angle into a closed state in which the drainage hole (320) does not match in communication with the flow channel region (224) or an open state in which at least a portion of the drainage hole (320) matches bottom of the flow channel region (224) and is disposed in communication with the flow channel region (224).

6. The battery pack (10) according to claim 5, wherein the drainage hole (320) is rectangular in shape.

7. The battery pack (10) according to claim 6, wherein the flow channel region (224) includes linear sections (224a) spaced a predetermined distance apart from each other and a curved section (224b) connecting the linear sections, and
wherein the drainage hole (320) has a short side length (D2) which is shorter than the distance (D1) between the linear sections (224a) and a long side length which is longer than the distance (D1) between the linear sections (224a).

8. The battery pack (10) according to claim 1,
wherein the pack tray (210) has the internal space divided by a partition (211) to form a plurality of module receiving portions (213, 213A, 213B, 213C), and
wherein each one battery module (100) is disposed in each of the module receiving portions (213, 213A, 213B, 213C).

9. The battery pack (10) according to claim 8, wherein each of the module receiving portions (213, 213A, 213B, 213C) is covered by the bottom cover (221) so that a top is closed.

10. The battery pack (10) according to claim 8, wherein a plurality of valve units (300, 300A, 300B, 300C) is coupled to the bottom cover (221) so as to be located vertically on each battery module (100).

11. The battery pack (10) according to any one of claims 1 to 10, wherein the drainage channel (113) is disposed vertically below the valve unit (300, 300A, 300B, 300C).

12. The battery pack (10) according to any one of claims 1 to 10, wherein a busbar frame (120) electrically connecting the battery cells is disposed below an end of the drainage channel (113).

13. The battery pack (10) according to any one of claims 1 to 10, wherein a gas detector (400) is attached to one wall of the pack tray (210), and the valve unit (300, 300A, 300B, 300C) and the gas detector (400) are connected with a signal transmission cable (500),
wherein the valve unit (300, 300A, 300B, 300C) is configured to rotate based on a gas detection signal of the gas detector (400), and
wherein the signal transmission cable (500) is inserted into a groove (115) for cable laying formed in the top portion (111) of the module housing (110).

14. A vehicle (1) comprising the battery pack (10) according to any one of claims 1 to 13.

## Patentansprüche

1. Batteriepack (10), umfassend:
• eine Vielzahl von Batteriemodulen (100), die jeweils Batteriezellen und ein Modulgehäuse (110) enthalten, das die Batteriezellen aufnimmt, wobei das Modulgehäuse (110) einen Ablaufkanal (113) enthält, der um eine vorbestimmte Tiefe in einem oberen Abschnitt (111) vertieft ist und von einer Kante zur anderen Kante ausgebildet ist; und
• ein Packgehäuse (200), das eine Packschale (210) mit einer offenen Oberseite und einem Innenraum, in dem die Vielzahl von Batteriemodulen (100, 100A, 100B, 100C) aufgenommen ist, und einen Packdeckel (220) enthält, der mit der Oberseite der Packschale (210) gekoppelt ist,
wobei der Packdeckel (220) enthält:
• einen unteren Deckel (221) mit einem Ventilmontageloch (222, 222A, 222B, 222C), das in einem voreingestellten Bereich offen ist und auf der Packschale (210) angeordnet ist, wobei das Ventilmontageloch (222) ein Loch ist, das ausgebildet ist, um es Kühlwasser zu ermöglichen, sich von der Oberseite des unteren Deckels (221) nach unten zu bewegen;
• einen oberen Deckel (223) mit einem Strömungskanalbereich (224), der einen Bewegungspfad des Kühlwassers bildet und auf einer Oberseite des unteren Deckels (221) angeordnet ist; und
• eine Ventileinheit (300, 300A, 300B, 300C), die drehbar in dem Ventilmontageloch (222, 222A, 222B, 222C) im Uhrzeigersinn oder gegen den Uhrzeigersinn montiert ist, wobei die Ventileinheit (300, 300A, 300B, 300C) konfiguriert ist, um das Kühlwasser in dem Strömungskanalbereich (224) dem Innenraum der Packschale (210) zuzuführen oder die Zufuhr des Kühlwassers in dem Strömungskanalbereich (224) zum Innenraum der Packschale (210) zu stoppen.

2. Batteriepack (10) nach Anspruch 1, ferner umfassend:
einen Gasdetektor (400), der in der Packschale (210) oder dem Batteriemodul (100, 100A, 100B, 100C) angeordnet ist,
wobei die Ventileinheit (300, 300A, 300B, 300C) konfiguriert ist, um sich basierend auf einem Gasdetektionssignal des Gasdetektors (400) zu drehen.

3. Batteriepack (10) nach Anspruch 2, wobei die Ventileinheit (300, 300A, 300B, 300C) und der Gasdetektor (400) mit einem Signalübertragungskabel (500) verbunden sind.

4. Batteriepack (10) nach Anspruch 1, wobei die Ventileinheit (300, 300A, 300B, 300C) enthält:
• eine Drehplatte (310), die in das Ventilmontageloch (222, 222A, 222B, 222C) eingesetzt und drehbar darin angeordnet ist; und
• ein Ablaufloch (320), das in einem Bereich der Drehplatte (310) ausgebildet ist.

5. Batteriepack (10) nach Anspruch 4, wobei die Ventileinheit (300, 300A, 300B, 300C) die Drehplatte (310) enthält, die konfiguriert ist, um sich um einen vorbestimmten Winkel in einen geschlossenen Zustand, in dem das Ablaufloch (320) nicht in Verbindung mit dem Strömungskanalbereich (224) steht, oder einen geöffneten Zustand zu drehen, in dem mindestens ein Abschnitt des Ablauflochs (320) mit der Unterseite des Strömungskanalbereichs (224) übereinstimmt und in Verbindung mit dem Strömungskanalbereich (224) angeordnet ist.

6. Batteriepack (10) nach Anspruch 5, wobei das Ablaufloch (320) eine rechteckige Form aufweist.

7. Batteriepack (10) nach Anspruch 6, wobei der Strömungskanalbereich (224) lineare Abschnitte (224a), die in einem vorbestimmten Abstand voneinander beabstandet sind, und einen gekrümmten Abschnitt (224b) enthält, der die linearen Abschnitte verbindet, und
wobei das Ablaufloch (320) eine kurze Seitenlänge (D2), die kürzer ist als der Abstand (D1) zwischen den linearen Abschnitten (224a), und eine lange Seitenlänge aufweist, die länger ist als der Abstand (D1) zwischen den linearen Abschnitten (224a).

8. Batteriepack (10) nach Anspruch 1,
wobei der Innenraum der Packschale (210) durch eine Trennwand (211) unterteilt ist, um eine Vielzahl von Modulaufnahmeabschnitten (213, 213A, 213B, 213C) zu bilden, und
wobei jeweils ein Batteriemodul (100) in jedem der Modulaufnahmeabschnitte (213, 213A, 213B, 213C) angeordnet ist.

9. Batteriepack (10) nach Anspruch 8, wobei jeder der Modulaufnahmeabschnitte (213, 213A, 213B, 213C) durch den unteren Deckel (221) so abgedeckt ist, dass eine Oberseite geschlossen ist.

10. Batteriepack (10) nach Anspruch 8, wobei eine Vielzahl von Ventileinheiten (300, 300A, 300B, 300C) mit dem unteren Deckel (221) gekoppelt ist, um vertikal über jedem Batteriemodul (100) angeordnet zu sein.

11. Batteriepack (10) nach einem der Ansprüche 1 bis 10, wobei der Ablaufkanal (113) vertikal unter der Ventileinheit (300, 300A, 300B, 300C) angeordnet ist.

12. Batteriepack (10) nach einem der Ansprüche 1 bis 10, wobei ein Sammelschienenrahmen (120), der die Batteriezellen elektrisch verbindet, unter einem Ende des Ablaufkanals (113) angeordnet ist.

13. Batteriepack (10) nach einem der Ansprüche 1 bis 10, wobei ein Gasdetektor (400) an einer Wand der Packschale (210) angebracht ist, und die Ventileinheit (300, 300A, 300B, 300C) und der Gasdetektor (400) mit einem Signalübertragungskabel (500) verbunden sind,
wobei die Ventileinheit (300, 300A, 300B, 300C) konfiguriert ist, um sich basierend auf einem Gasdetektionssignal des Gasdetektors (400) zu drehen, und
wobei das Signalübertragungskabel (500) in eine Nut zur Kabelverlegung (115) eingesetzt ist, die im oberen Abschnitt (111) des Modulgehäuses (110) ausgebildet ist.

14. Fahrzeug (1), umfassend das Batteriepack (10) nach einem der Ansprüche 1 bis 13.

## Revendications

1. Bloc-batterie (10), comprenant :
une pluralité de modules de batterie (100), comprenant chacun des cellules de batterie et un boîtier de module (110) logeant les cellules de batterie, dans lequel le boîtier de module (110) comprend un canal de drainage (113) qui est enfoui à une profondeur prédéterminée dans une partie supérieure (111) et formé depuis un bord jusqu'à l'autre bord ; et
un carter de bloc (200) comprenant un plateau de bloc (210) ayant un dessus ouvert et un espace interne dans lequel la pluralité de modules de batterie (100, 100A, 100B, 100C) est reçue, et un couvercle de bloc (220) couplé au dessus du plateau de bloc (210),
dans lequel le couvercle de bloc (220) comprend :
un couvercle inférieur (221) ayant un trou de montage de clapet (222, 222A, 222B, 222C) qui est ouvert dans une région prédéfinie et disposé sur le plateau de bloc (210), dans lequel le trou de montage de clapet (222) est un trou formé pour permettre à de l'eau de refroidissement de descendre depuis le dessus du couvercle inférieur (221) ;
un couvercle supérieur (223) ayant une région de canal d'écoulement (224) qui forme un trajet de déplacement de l'eau de refroidissement et qui est disposée sur une surface supérieure du couvercle inférieur (221) ; et
une unité de clapet (300, 300A, 300B, 300C) qui est montée de manière rotative dans le trou de montage de clapet (222, 222A, 222B, 222C) dans un sens horaire ou antihoraire, dans lequel l'unité de clapet (300, 300A, 300B, 300C) est configurée pour amener l'eau de refroidissement présente dans la région de canal d'écoulement (224) vers l'espace interne du plateau de bloc (210) ou pour arrêter l'alimentation de l'eau de refroidissement présente dans la région de canal d'écoulement (224) vers l'espace interne du plateau de bloc (210).

2. Bloc-batterie (10) selon la revendication 1, comprenant en outre :
un détecteur de gaz (400) disposé dans le plateau de bloc (210) ou le module de batterie (100, 100A, 100B, 100C),
dans lequel l'unité de clapet (300, 300A, 300B, 300C) est configurée pour tourner sur la base d'un signal de détection de gaz du détecteur de gaz (400).

3. Bloc-batterie (10) selon la revendication 2, dans lequel l'unité de clapet (300, 300A, 300B, 300C) et le détecteur de gaz (400) sont connectés par un câble de transmission de signal (500).

4. Bloc-batterie (10) selon la revendication 1, dans lequel l'unité de clapet (300, 300A, 300B, 300C) comprend :
une plaque rotative (310) qui est insérée et disposée de manière rotative dans le trou de montage de clapet (222, 222A, 222B, 222C) ; et
un trou de drainage (320) formé dans une région de la plaque rotative (310).

5. Bloc-batterie (10) selon la revendication 4, dans lequel l'unité de clapet (300, 300A, 300B, 300C) comprend la plaque rotative (310) configurée pour tourner d'un angle prédéterminé vers un état fermé dans lequel le trou de drainage (320) ne coïncide pas en communication avec la région de canal d'écoulement (224) ou vers un état ouvert dans lequel au moins une partie du trou de drainage (320) coïncide avec le fond de la région de canal d'écoulement (224) et est disposée en communication avec la région de canal d'écoulement (224).

6. Bloc-batterie (10) selon la revendication 5, dans lequel le trou de drainage (320) est de forme rectangulaire.

7. Bloc-batterie (10) selon la revendication 6, dans lequel la région de canal d'écoulement (224) comprend des sections linéaires (224a) espacées d'une distance prédéterminée les unes des autres et une section courbe (224b) reliant les sections linéaires, et
dans lequel le trou de drainage (320) a une longueur de côté court (D2) qui est plus courte que la distance (D1) entre les sections linéaires (224a) et une longueur de côté long qui est plus longue que la distance (D1) entre les sections linéaires (224a).

8. Bloc-batterie (10) selon la revendication 1,
dans lequel l'espace interne du plateau de bloc (210) est divisé par une cloison (211) pour former une pluralité de parties de réception de module (213, 213A, 213B, 213C), et
dans lequel chaque module de batterie (100) est disposé dans chacune des parties de réception de module (213, 213A, 213B, 213C).

9. Bloc-batterie (10) selon la revendication 8, dans lequel chacune des parties de réception de module (213, 213A, 213B, 213C) est recouverte par le couvercle inférieur (221) de sorte qu'un dessus soit fermé.

10. Bloc-batterie (10) selon la revendication 8, dans lequel une pluralité d'unités de clapet (300, 300A, 300B, 300C) est couplée au couvercle inférieur (221) de façon à être située verticalement sur chaque module de batterie (100).

11. Bloc-batterie (10) selon l'une quelconque des revendications 1 à 10, dans lequel le canal de drainage (113) est disposé verticalement sous l'unité de clapet (300, 300A, 300B, 300C).

12. Bloc-batterie (10) selon l'une quelconque des revendications 1 à 10, dans lequel un cadre de barre omnibus (120) connectant électriquement les cellules de batterie est disposé sous une extrémité du canal de drainage (113).

13. Bloc-batterie (10) selon l'une quelconque des revendications 1 à 10, dans lequel un détecteur de gaz (400) est fixé à une paroi du plateau de bloc (210), et l'unité de clapet (300, 300A, 300B, 300C) et le détecteur de gaz (400) sont connectés par un câble de transmission de signal (500),
dans lequel l'unité de clapet (300, 300A, 300B, 300C) est configurée pour tourner sur la base d'un signal de détection de gaz du détecteur de gaz (400), et
dans lequel le câble de transmission de signal (500) est inséré dans une rainure de pose de câble (115) formée dans la partie supérieure (111) du boîtier de module (110).

14. Véhicule (1) comprenant le bloc-batterie (10) selon l'une quelconque des revendications 1 à 13.
